# FASCICULE DE BREVET EUROPEEN

(11) **EP 3 762 706 B1**
(45) Date de publication et mention de la délivrance du brevet: **02.07.2025**
(21) Numéro de dépôt: 19716218.3
(22) Date de dépôt: 04.03.2019
(51) Int. Cl.: G01N 15/14, G01N 15/1429, G01N 15/00, G01N 15/10, G01N 35/00

(54) **PROCÉDÉ D'ANALYSE D'UN ÉCHANTILLON BIOLOGIQUE CONTENANT DES CELLULES BIOLOGIQUES, ET APAREIL D'ANALYSE POUR LA MISE EN OEUVRE DU PROCÉDÉ D'ANALYSE**
VERFAHREN ZUM ANALYSIEREN EINER BIOLOGISCHEN PROBE, DIE BIOLOGISCHE ZELLEN ENTHÄLT, UND ANALYSEVORRICHTUNG ZUR DURCHFÜHRUNG DES ANALYSEVERFAHRENS
METHOD FOR ANALYSING A BIOLOGICAL SAMPLE CONTAINING BIOLOGICAL CELLS, AND ANALYSING DEVICE FOR IMPLEMENTING THE ANALYSING METHOD

(30) Priorité: 07.03.2018 FR 1851958
(43) Date de publication de la demande: 13.01.2021
(73) Titulaire: ARTEION, 75007 Paris (FR)
(72) Inventeur: ROUSSEAU, Alain, 75001 Paris (FR)
(74) Mandataire: Germain Maureau
(86) Numéro de dépôt international: PCT/FR2019/050481
(87) Numéro de publication internationale: WO 2019/170993

(56) Documents cités:
- WO-A2-2006/083969
- US-A- 5 605 805
- US-A1- 2008 172 185

## Description

La présente invention concerne un procédé d'analyse d'un échantillon biologique contenant des cellules biologiques et en particulier des cellules sanguines, et un appareil d'analyse adapté pour la mise en œuvre d'un tel procédé d'analyse.

Les cellules qui circulent dans le sang comprennent des cellules non nucléées que sont les globules rouges ou érythrocytes (environ 5 millions par mm³ de sang normal), les plaquettes (environ 300 000 par mm³), et comprennent des cellules nucléées, les leucocytes (environ 10 000 par mm³). Le sang peut contenir d'autres cellules nucléées, comme des érythroblastes qui sont des globules rouges immatures ou d'autres cellules plus rares. Chaque type de cellule constitue ce que l'on appelle aussi une population.

D'autres liquides biologiques contiennent des cellules sanguines comme le liquide céphalorachidien ou l'urine. Par la suite on parle d'échantillon biologique mais cela n'est pas limité à un échantillon sanguin mais à tous les liquides biologiques contenant des cellules sanguines.

Les analyseurs classiques d'hématologie utilisant la cytométrie en flux ou non, sont destinés à réaliser la Numération Formule Sanguine et à délivrer des informations qualitatives lorsque des anomalies quantitatives sont détectées par type de cellule.

Les équipements de cytométrie spécialisés en immunohématologie permettent, grâce à des techniques plus sophistiquées et la mise en œuvre de réactifs spécifiques, de cibler des pathologies hématologiques qui peuvent affecter tous les types de cellules.

On rappelle que la cytométrie en flux consiste à réaliser au moins une focalisation hydrodynamique et à faire passer une par une les cellules sanguines dans un dispositif de mesure qui, selon ce qui est mis en œuvre, produit un certain nombre de mesures physiques pour chaque cellule. Pour que les mesures se fassent distinctement, il faut que les cellules soient séparées et défilent à des vitesses permettant les mesures et leur acquisition. De plus, il faut que les comptages soient suffisants pour permettre des évaluations statistiques correctes de chaque population. Pour ce faire, l'échantillon de sang n'est pas analysé pur mais dilué. De plus, compte tenu des quantités mille fois plus élevées de globules rouges que de leucocytes, l'échantillon, pour réaliser une analyse qui soit statistiquement représentative des populations de leucocytes, doit passer pendant un temps de plusieurs minutes dans le cytomètre. L'autre solution, pour diminuer dans un facteur dix le temps de passage de l'échantillon dans le cytomètre, consiste à réaliser, en complément d'une dilution de l'échantillon, une lyse qui détruit sélectivement les globules rouges pour disposer d'un échantillon suffisamment concentré en leucocytes et disposer ainsi de comptages statistiquement corrects pour ces populations.

Les paramètres de cytométrie en flux produits sont de deux sortes :
- soit de nature physique ou morphologique : mesure du volume des cellules par impédance (effet Coulter), mesures d'absorption optique, de diffraction à différents angles générés par le passage de chaque cellule dans un faisceau laser et mesure de fluorescence des acides nucléiques rendus fluorescents par un ou plusieurs fluorochromes préalablement mis en présence des cellules. Ces données permettent de caractériser chaque cellule par son volume, par son absorption optique qui dépend de sa surface et de son contenu, par sa complexité interne, par la nature de sa surface, sa composition et par son activité nucléique pour les cellules nucléées ;
- soit de nature immunologique (immunohématologie) : l'échantillon est placé en présence de réactifs contenant des anticorps conjugués à un fluorochrome et spécifiques de récepteurs exprimés à la surface de certaines cellules. Le passage des cellules dans un ou plusieurs faisceaux laser génère des signaux proportionnels aux marqueurs de surfaces cellulaires et permet ainsi de caractériser les cellules.

Un procédé d'analyse d'un échantillon biologique contenant des cellules biologiques comprend de façon connue les étapes suivantes :
- passage des cellules biologiques de l'échantillon biologique à analyser dans une cellule de mesure d'un cytomètre en flux,
- mesure de N paramètres de cytométrie, tels que des paramètres de cytométrie de nature morphologique ou immunologique, pour chaque cellule biologique contenue dans l'échantillon biologique à analyser,
- détermination, pour chaque cellule biologique de l'échantillon biologique à analyser, d'un point dans un espace à N dimensions dont des coordonnées sont définies en fonction des paramètres de cytométrie mesurées pour la cellule biologique correspondante, où N est un entier supérieur ou égal à 2,
- pour les équipements dont la fonction est limitée à la numération formule sanguine, regroupement des points en différentes grappes de cellules en fonction des paramètres de cytométrie mesurées, de manière à définir un fichier de grappes d'échantillon, l'étape de regroupement étant alors réalisée en utilisant des méthodes automatiques par zonage, des méthodes statistiques ou encore des méthodes par densité de points,
- pour les équipements plus sophistiqués effectuant des mesures hémato-immunologiques,
   - soit analyse visuelle par un opérateur, tel qu'un hématologue, spécialiste en cytométrie de représentations des points déterminés sur deux axes de mesure et regroupement des points en différentes grappes de cellules selon les critères de regroupement par seuils ou bien par zones choisis par l'opérateur,
   - soit regroupement automatique des points en différentes grappes de cellules en fonction des paramètres de cytométrie mesurées, de manière à définir un fichier de grappes d'échantillon, et analyse informatique du fichier de grappes d'échantillon et notamment des différentes grappes de cellules, l'étape d'analyse visant à qualifier et à quantifier les grappes de cellules ayant des caractéristiques communes,
- identification par l'opérateur d'une ou de plusieurs anomalies dans le fichier de grappes d'échantillon en comparaison à des échantillons normaux.

A partir des anomalies identifiées, par exemple par le franchissement de de seuils numériques (nombre anormalement bas ou anormalement haut d'un type de cellules), et de son expérience de cytométrie médicale, l'opérateur peut être capable soit de déterminer directement la pathologie du patient dont l'échantillon biologique a été analysé et le traitement associé, soit d'émettre un pronostic concernant la pathologie éventuelle du patient dont l'échantillon biologique a été analysé et d'envisager des analyses sanguines complémentaires afin de confirmer son pronostic.

Toutefois, les étapes de regroupement, d'analyse et d'identification sont assez subjectives et dépendent fortement de l'expérience de l'opérateur en cytométrie, de telle sorte qu'un diagnostic ou pronostic énoncé pour un patient par un opérateur dépend de la qualification et de l'expérience de ce dernier. Quoiqu'il en soit, ces étapes sont laborieuses et chronophages. Les cadences de traitement de ces équipements sont faibles comparées à celles des compteurs d'hématologie.

De plus, la cytométrie en immunohématologie utilisant des anticorps pour caractériser les cellules de manière très spécifique, utilise des produits onéreux, ce qui fait que la cytométrie a du mal à s'imposer comme méthode de routine.

Enfin, ce type d'analyse visant à regrouper les cellules ayant des caractéristiques communes a pour objet de dénombrer et de qualifier les populations pour en qualifier les anomalies par type de population Ce type d'analyse ne s'intéresse donc pas à l'ensemble des données comme à une image globale de l'échantillon du patient.

Le document US5605805 divulgue un procédé de détermination de la lignée de cellules de leucémie aiguë dans un échantillon par cytométrie de flux, le procédé comprenant notamment des étapes consistant à identifier des populations de cellules normales en comparant un profil immunologique et un profil de dispersion de chaque population de cellules à un profil de dispersion et à un profil immunologique attendu pour des cellules normales ; à soustraire le profil de dispersion de la population de cellules normales du profil de dispersion de chaque groupe contenant des cellules appartenant à la population de cellules normales ; et à déterminer la lignée des populations de cellules anormales restantes en comparant les profils de dispersion et les profils immunologiques des populations de cellules anormales aux profils de dispersion et aux profils immunologiques attendus pour des populations de cellules leucémiques connues.

La présente invention vise à remédier à ces inconvénients et à introduire un nouveau paradigme en utilisant les données recueillies par le cytomètre en flux pour caractériser les cellules biologiques, les regrouper automatiquement par grappe, identifier et qualifier les populations des grappes mais aussi considérer l'ensemble des données comme une représentation image de l'échantillon biologique et de traiter également cette image par rapport à des images de référence.

Le problème technique à la base de l'invention consiste notamment à fournir un procédé d'analyse d'un échantillon biologique contenant des cellules biologiques qui optimise le traitement des données issues des mesures, qui assure une reproductibilité des résultats obtenus, tout en faisant en sorte que ce procédé soit compatible avec des équipements de haute cadence et ne demande pas de compétence particulière, ni de temps à l'opérateur.

A cet effet, la présente invention concerne un procédé d'analyse d'un échantillon biologique contenant des cellules biologiques incluant des cellules sanguines, le procédé d'analyse comprenant les étapes suivantes :
- passage des cellules biologiques de l'échantillon biologique à analyser dans une cellule de mesure d'un cytomètre en flux,
- mesure de N paramètres de cytométrie des cellules biologiques contenues dans un échantillon biologique à analyser,
- détermination, pour chaque cellule biologique de l'échantillon biologique à analyser, d'un point dans un espace à N dimensions dont des coordonnées sont définies en fonction des paramètres de cytométrie mesurées pour la cellule biologique correspondante de l'échantillon biologique à analyser, où N est un entier supérieur ou égal à 3,
- regroupement automatique des points déterminés en différentes grappes de cellules en fonction des paramètres de cytométrie mesurées pour chaque cellule biologique de l'échantillon biologique à analyser, de manière à définir un fichier de grappes d'échantillon, le fichier de grappes d'échantillon étant avantageusement un fichier informatique décrivant numériquement l'échantillon biologique à analyser et étant préférentiellement rédigé suivant un standard,
- identification des populations de cellules définies par les différentes grappes de cellules du fichier de grappes d'échantillon,
- comptage des points de chaque grappe de cellules du fichier de grappes d'échantillon,
- comparaison du fichier de grappes d'échantillon avec des fichiers de grappes de référence, chacun des fichiers de grappes de référence étant définis à partir de paramètres de cytométrie d'un échantillon biologique pathologique ou anormal respectif.

Une telle configuration du procédé d'analyse selon la présente invention permet d'identifier automatiquement une éventuelle ressemblance entre le fichier de grappes d'échantillon, qui décrit numériquement l'échantillon biologique à analyser, et un ou plusieurs fichiers de grappes de référence, et donc d'améliorer la pertinence des indications rendues à un opérateur (via par exemple des indications spécifiques ou des alarmes ajoutées aux mesures rendues) à l'issue de l'étape de comparaison et ainsi de contribuer à donner des recommandations les plus pertinentes possibles à l'opérateur afin d'accélérer les diagnostics. En particulier, le procédé d'analyse selon la présente invention permet au laboratoire de gagner du temps dans les décisions à prendre, de préciser le champ des investigations ultérieures et d'orienter, si nécessaire, les hématologues plus rapidement vers des analyses complémentaires qui peuvent être des frottis sanguins suivis d'analyses au microscope ou d'analyses immunologiques et ce avec des moyens simples, très peu onéreux et robustes. Il ne s'agit pas de substituer ce procédé à l'analyse d'image du frottis sanguin mais de tirer le maximum d'information possible de l'hémogramme numérique et ceci sans surcoût ni matériel, ni en temps.

Le procédé d'analyse selon la présente invention consiste plus particulièrement à réaliser, sur la base de mesures cytométriques, une analyse morphologique comparée de l'échantillon biologique considéré, avec des échantillons biologiques de référence, et plus précisément une analyse morphologique comparée du fichier de grappes d'échantillon, qui est établi à partir de l'échantillon biologique analysé, avec des fichiers de grappes de référence établis à partir d'échantillons biologiques pathologiques ou anormaux dont on connait les données cliniques.

Le procédé d'analyse selon la présente invention se fonde donc sur la réalisation de fichiers de référence obtenus à partir d'échantillons dont on connait la pathologie. Il s'agit en fait d'un apprentissage réalisé par compilation d'essais cliniques et qui peut progresser en fonction des nouveaux fichiers de référence correspondant à de nouvelles anomalies ou pathologies.

Chaque version d'apprentissage n'est pas spécifique à chaque machine mais est validé et s'applique à toutes les machines du même type qui fonctionnent avec les réactifs de compositions identiques pour les préparations (dilution, lyse, marquage fluorescent).

Les cellules qui circulent dans le sang résultent de ce qui est produit par l'hématopoïèse, par le détachement de cellules endothéliales et par les infections par des agents allogènes comme des bactéries ou des parasites comme le plasmodium. L'hématopoïèse produit dans la moelle osseuse, d'une part les leucocytes, c'est-à-dire les polymucléaires ou granulocytes neutrophiles, éosinophiles et basophiles, les monocytes et les lymphocytes, et d'autre part les érythrocytes et les plaquettes. Chaque type de cellule peut être affecté par différents types de pathologies qui peuvent être à l'origine dans le sang des cellules immatures comme par exemple des érythroblastes qui sont des érythrocytes encore pouvus de leur noyau ou des réticulocytes qui n'ont plus de noyau mais encore une activité ribosomique et mitochondriale.

Selon un mode de mise en œuvre de l'invention, les paramètres de cytométrie mesurés sont des mesures physiques comme le volume de chaque cellule biomogique, l'absorption optique, la diffraction aux grands angles, la diffraction aux petits angles.

Le procédé d'analyse peut en outre présenter une ou plusieurs des caractéristiques suivantes, prises seules ou en combinaison.

Selon un mode de mise en œuvre de l'invention, les cellules biologiques à analyser peuvent être des cellules sanguines, et plus particulièrement des cellules sanguines qui ont fait l'objet d'une préparation, soit d'une dilution isotonique pour préserver les cellules et pouvoir les espacer suffisamment dans le cytomètre et mesurer, dans les meilleurs conditions, chaque paramètre de cytométrie, soit d'une opération de lyse sélective qui va éliminer les globules rouges qui sont environ mille fois plus nombreux que les globules blancs, cette opération de lyse ayant pour effet de pouvoir identifier et dénombrer les leucocytes dans un temps plus court mais cela a également comme conséquence de modifier, selon le type de lyse, le volume et la réponse optique des cellules non lysées observées.

De fait, le mode de mise en œuvre préféré de l'invention utilise deux cytomètres en parallèle, un premier dans lequel l'échantillon biologique est seulement dilué et le second, qui traite l'échantillon biologique lysé, plus particulièrement pour observer les cellules nucléées. Cela permet de collecter des données dans des espaces à des dimensions N >3 aussi bien pour l'échantillon biologique lysé que pour l'échantillon biologique non lysé. Cela signifie que les cellules non nucléées que sont les érythrocytes et les plaquettes sont traitées par les mêmes types d'algorithmes que les cellules nucléées.

Selon un mode de mise en œuvre de l'invention, l'étape de regroupement par grappes est réalisée par un traitement automatique, selon des algorithmes spécifiques, des points déterminés par les N paramètres de cytométrie correspondants à chaque cellule biologique de l'échantillon biologique à analyser. Les différents points peuvent par exemple être regroupés en différentes grappes de points selon des critères statistiques ou des critères de densité de ces points dans l'espace à N dimensions, de manière à définir un fichier décrivant numériquement l'échantillon biologique à analyser par des points représentant chaque cellule, regroupés en grappes positionnées dans l'espace à N dimensions.

Selon un mode de mise en œuvre de l'invention, le procédé d'analyse comprend une étape d'échantillonnage et de numérisation d'un ensemble de signaux analogiques générés pendant la durée de l'étape de mesure de manière à définir un premier fichier de données brutes analogue à un oscillogramme numérisé pour chacune des N voies de mesure, et une étape de synchronisation et de regroupement des N signaux numérisés pour chaque cellule biologique de l'échantillon à analyser par un premier niveau de traitement informatique.

Selon un mode de mise en œuvre de l'invention, l'étape de regroupement consiste à regrouper les points déterminés en différentes grappes de cellules en utilisant des méthodes statistiques ou permettant d'isoler les grappes par analyse de densité spatiale des points représentant les cellules dans l'espace à N dimensions.

Selon un mode de mise en œuvre de l'invention, chaque axe de coordonnée de l'espace à N dimensions est correspond à un paramètre de cytométrie respectif.

Selon un mode de mise en œuvre de l'invention, N est un entier supérieur ou égal à 4, et peut par exemple être égal à 5.

Selon un mode de mise en œuvre de l'invention, le fichier de grappes d'échantillon est au format FCS (Flow Cytometry Standard).

Selon un mode de mise en œuvre de l'invention, le procédé d'analyse comprend en outre une étape d'émission d'un message d'alarme lorsque le fichier de grappes d'échantillon est au moins partiellement identique ou similaire à un fichier de grappes de référence, et par exemple lorsque des grappes de cellules prédéterminées du fichier de grappes d'échantillon sont identiques ou similaires à des grappes de cellules prédéterminées du fichier de grappes de référence.

Selon un mode de mise en œuvre de l'invention, le message d'alarme émis contient des indications relatives à une pathologie ou une anormalité associée au fichier de grappes de référence auquel le fichier de grappes d'échantillon est au moins partiellement identique ou similaire. Ces dispositions permettent de communiquer à l'opérateur une probabilité de pathologie associée à l'échantillon biologique analysé, mais ne constitue en aucun cas un diagnostic de la pathologie dont peut être atteint le patient auquel l'échantillon biologique analysé a été prélevé.

Selon un mode de mise en œuvre de l'invention, le procédé d'analyse comprend en outre une étape d'analyse du fichier de grappes d'échantillon de manière à détecter au moins une éventuelle anomalie dans le fichier de grappes d'échantillon.

Dans un exemple qui ne fait pas partie de l'invention revendiquée, l'étape de comparaison est réalisée uniquement lorsqu'au moins une anomalie est détectée lors de l'étape d'analyse.

Selon un mode de mise en œuvre de l'invention, lorsqu'au moins une anomalie est détectée lors de l'étape d'analyse, le message d'alarme émis lors de l'étape d'émission contient également des informations relatives à l'au moins une anomalie détectée.

Selon un mode de mise en œuvre de l'invention, l'étape d'analyse comprend une étape d'analyse, pour chaque grappe de cellules du fichier de grappes d'échantillon, d'au moins un paramètre morphologique de ladite grappe de cellule.

Selon un mode de mise en œuvre de l'invention, l'au moins un paramètre morphologique de chaque grappe de cellule du fichier de grappes d'échantillon peut comprendre le positionnement de ladite grappe de cellules, la distribution des points de ladite grappe de cellules, le nombres de points de ladite grappe de cellules, et/ou la présence ou l'absence de ladite grappe de cellules. Ainsi, la détection d'un dénombrement anormal d'une grappe de cellules, d'un positionnement relatif anormal entre différentes grappes de cellules ou encore de la présence d'une grappe de cellules relatives à une population de cellules anormales permet de détecter une anomalie dans le fichier de grappe d'échantillon.

Selon un mode de mise en œuvre de l'invention, l'étape d'analyse comprend une étape de détection d'une anomalie si au moins un paramètre morphologique d'au moins une grappe de cellules du fichier de grappes d'échantillon dépasse une valeur de seuil prédéterminée respective.

Selon un mode de mise en œuvre de l'invention, l'étape d'analyse comprend les étapes suivantes :
- comparaison, pour chaque grappe de cellules du fichier de grappes d'échantillon, du nombre de points regroupés dans ladite grappe de cellules avec au moins une valeur de seuil prédéterminée respective,
- détection d'une anomalie si le nombre de points regroupés dans au moins l'une des grappes de cellules est inférieur et/ou supérieur à l'au moins une valeur de seuil prédéterminée respective.

Selon un mode de mise en œuvre de l'invention, l'étape d'analyse comprend les étapes suivantes :
- comparaison, pour chaque grappe de cellules du fichier de grappes d'échantillon, du nombre de points regroupés dans ladite grappe de cellules avec une valeur de seuil inférieure prédéterminée respective ou avec une valeur de seuil supérieure prédéterminée respective,
- détection d'une anomalie si le nombre de points regroupés dans au moins l'une des grappes de cellules est inférieur à la valeur de seuil inférieure prédéterminée respective ou supérieur à la valeur de seuil supérieure prédéterminée respective.

Selon un mode de mise en œuvre de l'invention, l'étape d'analyse comprend les étapes suivantes :
- analyse de la distribution des points dans chaque grappe de cellules du fichier de grappes d'échantillon,
- détection d'une anomalie si la distribution des points dans au moins l'une des grappes de cellules n'est pas gaussienne.

Selon un mode de mise en œuvre de l'invention, l'étape d'analyse comprend les étapes suivantes :
- analyse du positionnement des grappes de cellules du fichier de grappes d'échantillon,
- détection d'une anomalie si au moins deux grappes de cellules du fichier de grappes d'échantillon sont au moins partiellement confondues.

Selon un mode de mise en œuvre de l'invention, l'étape d'analyse comprend les étapes suivantes :
- analyse des grappes de cellules du fichier de grappes d'échantillon,
- détection d'une anomalie si la présence ou l'absence d'au moins une grappe de cellules prédéterminée est détectée.

Selon un mode de mise en œuvre de l'invention, l'étape d'analyse comprend les étapes suivantes :
- analyse du fichier de grappes d'échantillon,
- détection d'une anomalie si le nombre de grappes de cellules est supérieur ou inférieur à une valeur de référence prédéterminée.

Selon un mode de mise en œuvre de l'invention, l'étape d'analyse comprend une étape de recherche de grappes de cellules anormales ou atypiques, c'est-à-dire situées en dehors des grappes de cellules normales, les grappes de cellules anormales ou atypiques pouvant par exemple correspondre à des cellules immatures ou à des parasites. Le procédé d'analyse peut en outre comprend une étape de comparaison de ces grappes de cellules anormales ou atypiques avec les fichiers de référence.

Selon un mode de mise en œuvre de l'invention, l'étape de mesure de paramètres de cytométrie comprend au moins une étape de mesure de paramètres de cytométrie représentatifs de la morphologie et/ou de la structure des cellules biologiques de l'échantillon biologique à analyser.

Selon un mode de mise en œuvre de l'invention, l'étape de mesure de paramètres de cytométrie comprend au moins une étape de mesure, pour chaque cellule biologique de l'échantillon biologique à analyser, d'au moins une propriété optique de ladite cellule biologique.

Selon un mode de mise en œuvre de l'invention, l'étape de mesure de paramètres de cytométrie comprend au moins une étape de mesure, pour chaque cellule biologique de l'échantillon biologique à analyser, d'au moins une propriété électrique et/ou électromagnétique de ladite cellule biologique.

Selon un mode de mise en œuvre de l'invention, l'étape de mesure de paramètres de cytométrie comprend une étape de mesure d'une quantité de lumière absorbée ou réémise par chaque cellule biologique de l'échantillon biologique à analyser.

Selon un mode de mise en œuvre de l'invention, l'étape de mesure de paramètres de cytométrie comprend :
- une étape de mesure de l'intensité d'un faisceau lumineux diffusé aux petits angles par chaque cellule biologique, et/ou
- une étape de mesure de l'intensité d'un faisceau lumineux diffusé à 90° par chaque cellule biologique, et/ou
- une étape de mesure de l'intensité d'un faisceau lumineux diffusé selon un chemin optique du faisceau lumineux incident par chaque cellule biologique.

La lumière diffusée par chaque cellule biologique renseigne sur la morphologie et la structure de ladite cellule biologique. En particulier, l'intensité d'un faisceau lumineux diffusé aux petits angles, par exemple à des angles inférieurs à 15°, avantageusement égaux 4° et/ou 9°, par chaque cellule biologique est sensiblement proportionnelle à la taille de ladite cellule biologique, tandis que l'intensité d'un faisceau lumineux diffusé à 90° par chaque cellule biologique est proportionnelle à la forme, à la structure interne et à la granularité de ladite cellule biologique. En outre, l'intensité d'un faisceau lumineux dans l'axe optique du faisceau lumineux incident par chaque cellule biologique est proportionnelle à la taille et à la viabilité de ladite cellule biologique. Une telle mesure de diffusion selon le chemin optique du faisceau lumineux incident correspond à une mesure de l'intensité de l'absorption lumineuse de chaque cellule biologique.

Ainsi, l'utilisation simultanée de ces deux ou trois paramètres précités (mesure d'impédance, mesure d'absorption optique, mesures de diffusion à différents angles) permet de distinguer, dans un échantillon biologique, par exemple les plaquettes, les érythrocytes, les lymphocytes, les monocytes et les différentes populations de polynucléaires.

Les valeurs d'angle communiqués ci-dessous s'entendent par rapport au chemin optique du faisceau lumineux incident.

Selon un mode de mise en œuvre de l'invention, l'étape de mesure de paramètres de cytométrie comprend une étape de mesure de l'intensité d'au moins un faisceau de fluorescence émis par chaque cellule biologique, par exemple à 90°.

Selon un mode de mise en œuvre de l'invention, l'étape de mesure de paramètres de cytométrie comprend en outre une étape de mesure de la variation d'impédance électrique générée par le passage des cellules biologiques à travers une chambre de mesure.

Selon un mode de mise en œuvre de l'invention, l'étape de mesure de paramètres de cytométrie comporte les étapes suivantes :
- émission d'un faisceau lumineux incident en direction des cellules biologiques passant dans la chambre de mesure de telle sorte que le faisceau lumineux incident croise le trajet des cellules biologiques,
- détection d'au moins un faisceau lumineux issu de chaque cellule biologique passant dans la chambre de mesure.

Selon un mode de mise en œuvre de l'invention, l'étape de passage comporte au moins une étape de gainage hydrodynamique des cellules biologiques passant dans la chambre de mesure.

Selon un mode de mise en œuvre de l'invention, l'étape de détection comprend une étape de détection simultanée d'au moins un faisceau lumineux diffusé par chaque cellule biologique passant dans la chambre de mesure et d'au moins un faisceau de fluorescence émis par chaque cellule biologique passant dans la chambre de mesure.

Selon un mode de mise en œuvre de l'invention, l'étape de détection comprend une étape de détection simultanée de faisceaux lumineux diffusés dans au moins deux directions différentes par chaque cellule biologique passant dans la chambre de mesure et d'au moins deux faisceaux de fluorescence émis par chaque cellule biologique passant dans la chambre de mesure à au moins deux longueurs d'onde différentes.

Selon un mode de mise en œuvre de l'invention, le procédé d'analyse comprend une étape de détermination de la structure et/ou de la forme desdites cellules biologiques.

Selon un mode de mise en œuvre de l'invention, procédé d'analyse comprend une étape de détermination de la concentration des cellules biologiques et/ou de la distribution des cellules biologiques dans les grappes de cellules respective.

Selon un mode de mise en œuvre de l'invention, le procédé d'analyse comprend en outre les étapes suivantes :
- passage des cellules biologiques d'un échantillon biologique de référence dans une cellule de mesure d'un cytomètre en flux,
- mesure de N paramètres de cytométrie pour chaque cellule biologique contenue dans l'échantillon biologique de référence,
- détermination, pour chaque cellule biologique de l'échantillon biologique de référence, d'un point dans un espace à N dimensions dont des coordonnées sont définies en fonction des paramètres de cytométrie mesurés pour ladite cellule biologique de l'échantillon biologique de référence, où N est un entier supérieur ou égal à 3,
- regroupement automatique des points déterminés relatifs à l'échantillon biologique de référence en différentes grappes de cellules en fonction des paramètres de cytométrie mesurés pour chaque cellule biologique de l'échantillon biologique de référence, de manière à définir un fichier de grappes de référence,
- répéter lesdites étapes de passage, de mesure, de détermination et de regroupement pour une pluralité d'échantillons biologiques de référence de manière à définir une pluralité de fichiers de grappes de référence.

Selon un mode de mise en œuvre de l'invention, le procédé d'analyse comporte, préalablement à l'étape de passage des cellules biologiques de l'échantillon biologique à analyser, une étape de préparation de l'échantillon biologique à analyser. L'étape de préparation comporte par exemple une étape de dilution de l'échantillon biologique à analyser, par exemple à l'aide d'un diluant isotonique. L'étape de préparation peut en outre comprendre, en plus de l'étape de dilution, une étape de lyse sélective d'au moins certaines des cellules biologiques contenues dans l'échantillon biologique à analyser, et par exemple des érythrocytes.

Selon un mode de mise en œuvre de l'invention, l'étape de préparation comprend une étape de marquage d'au moins certaines des cellules biologiques contenues dans l'échantillon biologique à analyser, et plus particulièrement les acides nucléiques d'au moins certaines des cellules biologiques contenues dans l'échantillon biologique à analyser, avec un fluorochrome, tel qu'un colorant fluorescent.

Selon un mode de mise en œuvre de l'invention, le procédé d'analyse comprend une étape d'intégration du fichier de grappes d'échantillon en tant que fichier de grappes de référence. Une telle étape d'intégration est notamment réalisée après qu'un hématologue a identifié la pathologie relative à l'échantillon biologique à analyser et a associé des indications relatives à une telle pathologie au fichier de grappes d'échantillon.

Selon un mode de mise en œuvre de l'invention, le procédé d'analyse, et notamment l'étape d'analyse, comprend une étape de comparaison du fichier de grappes d'échantillon avec des fichiers de grappes normaux, chacun des fichiers de grappes normaux étant définis à partir de paramètres de cytométrie d'un échantillon biologique normal respectif. Dans la présente description, on entend par échantillon biologique « normal », un échantillon biologique qui n'est pas pathologique et qui n'est pas anormal.

Selon un mode de mise en œuvre de l'invention, l'étape de préparation comprend l'ajout, dans l'échantillon biologique à analyser, d'un ou plusieurs réactifs contenant des anticorps spécifiques de récepteurs se trouvant sur les membranes des cellules biologiques. Ces anticorps sont conjugués soit à des traceurs fluorescents, soit à des particules qui permettent de générer un ou plusieurs signaux spécifiques sur chaque cellule. Ainsi le procédé d'analyse selon l'invention permet d'ajouter, aux grandeurs physiques de base converties numériquement en paramètres de cytométrie, des mesures immuno-hématologiques à la demande pour pouvoir mieux préciser ou confirmer un diagnostic.

La présente invention concerne en outre un appareil d'analyse comprenant :
- un cytomètre en flux comprenant une cellule de mesure destinée au passage de cellules biologiques d'un échantillon biologique à analyser et des moyens de mesure configurés pour mesurer des paramètres de cytométrie des cellules biologiques de l'échantillon biologique à analyser, et
- unité de traitement configurée pour :
   - déterminer, pour chaque cellule biologique de l'échantillon biologique à analyser, un point dans un espace à N dimensions dont des coordonnées sont définies en fonction des paramètres de cytométrie mesurés pour la cellule biologique correspondante de l'échantillon biologique à analyser, où N est un entier supérieur ou égal à 3,
   - regrouper des points en différentes grappes de cellules en fonction des paramètres de cytométrie mesurés pour chaque cellule biologique de l'échantillon biologique à analyser, de manière à définir un fichier de grappes d'échantillon,
   - comparer le fichier de grappes d'échantillon avec des fichiers de grappes de référence, chacun des fichiers de grappes de référence étant définis à partir de paramètres de cytométrie d'un échantillon biologique pathologique ou anormal respectif.

Selon un mode de mise en œuvre de l'invention, l'appareil d'analyse est un appareil d'analyse pour diagnostic in vitro, tel qu'un appareil d'hématologie.

Selon un mode de mise en œuvre de l'invention, la cellule de mesure du cytomètre en flux est inclinée par rapport à l'horizontale, et par exemple d'un angle d'environ 45°.

De toute façon l'invention sera bien comprise à l'aide de la description qui suit en référence aux dessins schématiques annexés représentant, à titre d'exemple non limitatif, une forme d'exécution de ce cytomètre en flux.
Figures 1 et 2 sont des vues en perspective d'un cytomètre en flux appartenant à un cytomètre en flux selon la présente invention.
Figure 3 est une vue en coupe transversale du cytomètre en flux de la figure 1.
Figures 4 est une vue à l'échelle agrandie d'un détail de la figure 3.
Figure 5 est vue en coupe transversale du cytomètre en flux de la figure 1.
Figure 6 est une vue en coupe selon la ligne VI-VI de la figure 2.

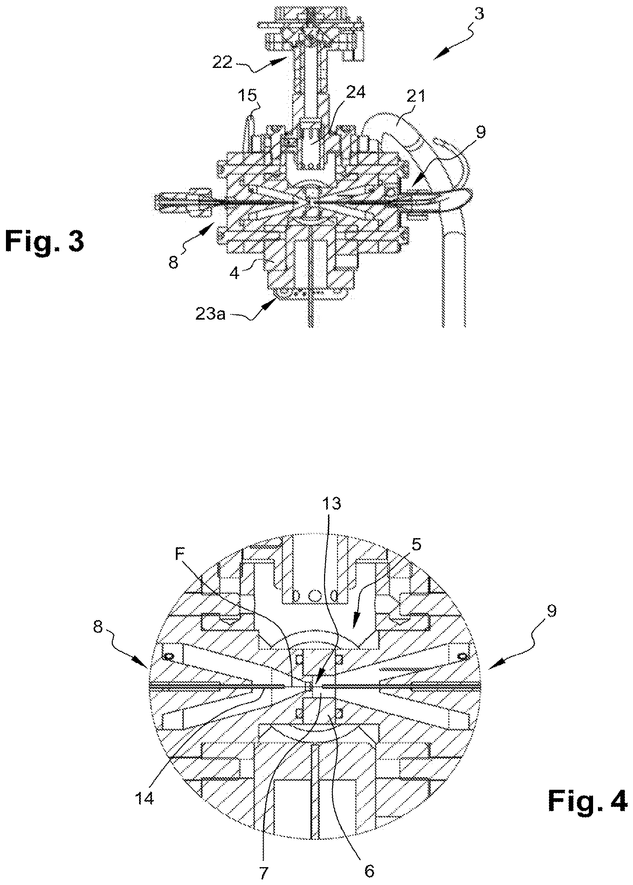

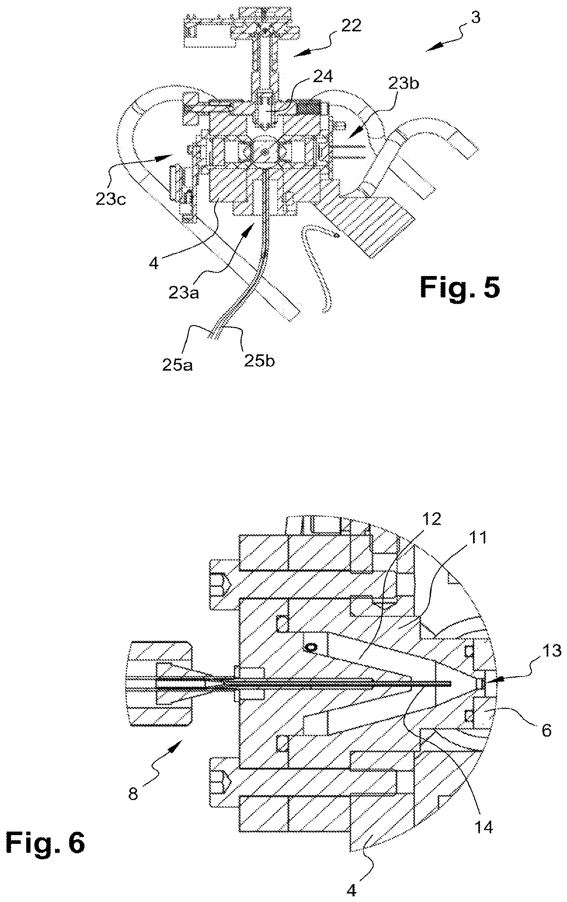

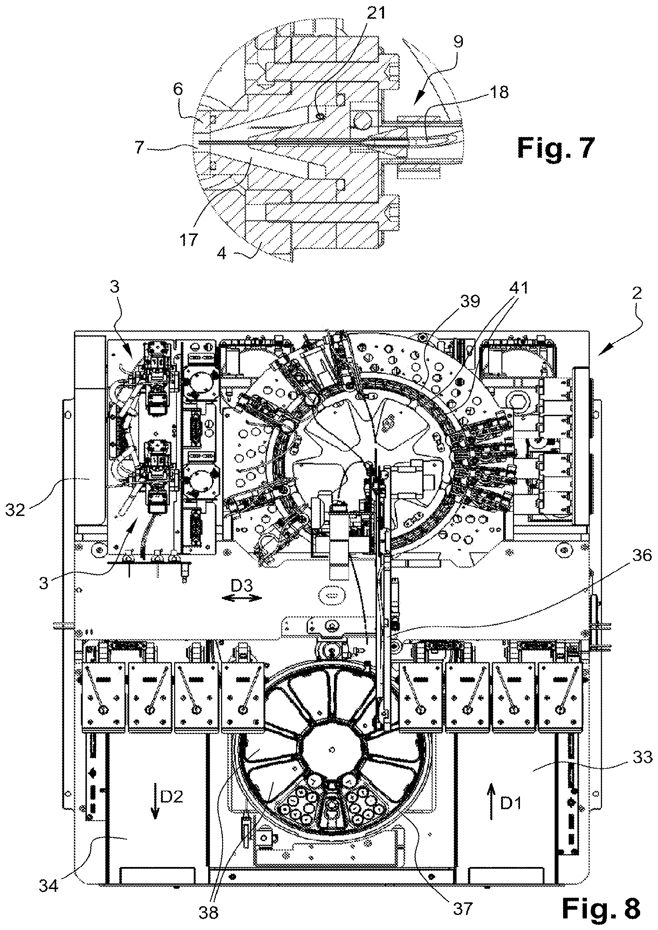

Figures 6 et 7 sont des vues à l'échelle agrandie de détails de la figure 3.
Figure 8 est une vue de dessus d'un appareil d'analyse comprenant le cytomètre en flux selon la présente invention.

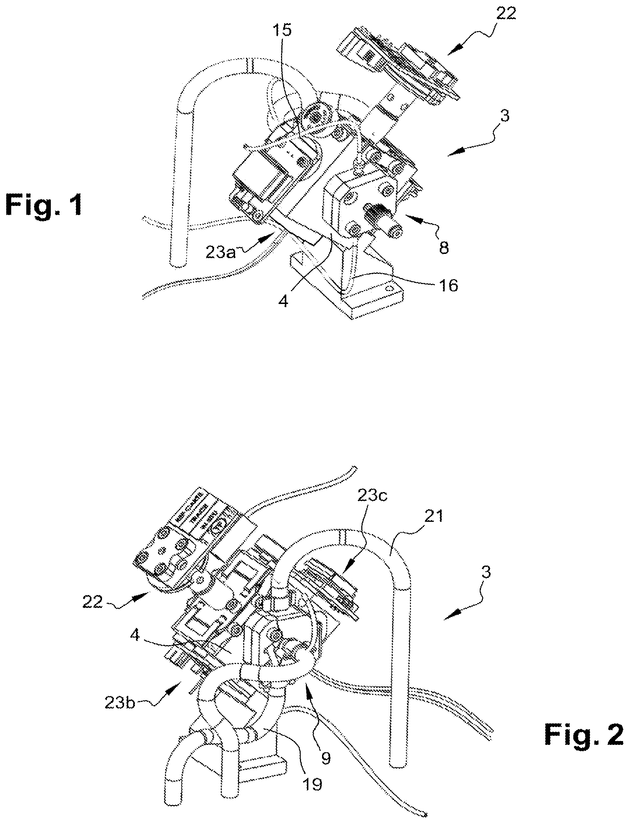

Les figures 1 à 7 représentent un cytomètre en flux 3, également nommé tête de mesure cytométrique, appartenant à un appareil d'analyse 2 selon la présente invention.

Le cytomètre en flux 3 comprend un support 4 monobloc qui peut être par exemple métallique. Le support 4 est parallélépipédique et délimite un logement de réception 5 interne. Le support 4 comporte notamment six ouvertures de passage ménagées respectivement sur les six faces externes du support 4.

Le cytomètre en flux 3 comprend en outre une cellule de mesure 6 (montrée plus particulièrement sur la figure 4) qui délimite au moins en partie une chambre de mesure 7, un dispositif d'injection 8 agencé pour injecter un flux de cellules biologiques F dans la chambre de mesure 7, et un dispositif d'évacuation 9 agencé pour évacuer à l'extérieur du cytomètre en flux 3 le flux de cellules biologiques F injecté dans la chambre de mesure 7.

Comme montré sur la figure 4, la cellule de mesure 6 est annulaire et est interposée de manière étanche entre les dispositifs d'injection et d'évacuation 8, 9. La cellule de mesure 6 est logée dans le logement de réception 5 délimité par le support 4, et est isolée fluidiquement du logement de réception 5. La cellule de mesure 6 est avantageusement réalisée en un matériau électriquement isolant et transparent à la lumière, et par exemple en polyméthacrylate de méthyle, en verre ou en quartz pour éviter l'autofluorescence.

Les dispositifs d'injection et d'évacuation 8, 9 sont fixés respectivement sur deux faces externes opposées du support 4, et par exemple sur les faces externes latérales opposées du support 4. Toutefois, les dispositifs d'injection et d'évacuation 8, 9 pourraient également être fixés respectivement sur les deux faces externes supérieure et inférieure du support 4.

Comme montré plus particulièrement sur les figures 3 et 6, le dispositif d'injection 8 comprend une buse d'injection 11 délimitant une chambre interne 12. La buse d'injection 11 est munie d'un orifice d'injection 13 débouchant dans la chambre de mesure 7 et agencé pour relier fluidiquement à la chambre interne 12 à la chambre de mesure 7.

Le dispositif d'injection 8 comprend en outre un premier conduit d'alimentation 14 tubulaire destiné à alimenter la chambre interne 12 avec un échantillon biologique à analyser contenant, en suspension, des cellules biologiques à analyser.

Comme montré sur la figure 1, le dispositif d'injection 8 comporte de plus un conduit de refoulement 15 relié fluidiquement à la chambre interne 12 et destiné à refouler à l'extérieur du cytomètre en flux 3 le contenu de la chambre interne 12. Le conduit de refoulement 15 est plus particulièrement destiné à refouler à l'extérieur du cytomètre en flux 3 un fluide de rinçage introduit dans la chambre interne 12 via le premier conduit d'alimentation 14.

Le dispositif d'injection 8 comprend en outre un deuxième conduit d'alimentation 16 destiné à alimenter la chambre interne 12 avec un fluide de gainage. La buse d'injection 11 et le deuxième conduit d'alimentation 16 sont configurés de telle sorte que le fluide de gainage introduit dans la chambre interne 12 via le deuxième conduit d'alimentation 16 est apte à gainer hydrodynamiquement l'échantillon biologique introduit dans la chambre interne 12 avant que l'échantillon biologique ne traverse l'orifice d'injection 13.

Comme montré sur la figure 7, le dispositif d'évacuation 9 délimite une chambre interne 17 débouchant dans la chambre de mesure 7 et comprend en outre un conduit d'évacuation 18 tubulaire relié fluidiquement à la chambre de mesure 7 et destiné à évacuer le flux de cellules biologiques F injecté dans la chambre de mesure 7 vers l'extérieur du cytomètre en flux 3. Le conduit d'évacuation 18 s'étend en partie dans une chambre interne 17 et débouche dans la chambre de mesure 7 en regard de l'orifice d'injection 13.

Le dispositif d'évacuation 9 comprend de plus un troisième conduit d'alimentation 19 relié fluidiquement à la chambre de mesure 7 et destiné à alimenter la chambre de mesure 7 avec un fluide de gainage. La chambre de mesure 7 et le troisième conduit d'alimentation 19 sont configurés de telle sorte que le fluide de gainage introduit dans la chambre de mesure 7 via le troisième conduit d'alimentation 19 est apte à gainer hydrodynamiquement le flux de cellules biologiques F s'écoulant à travers la chambre de mesure 7.

Comme montré sur les figures 1 et 7, le dispositif d'évacuation 9 comporte de plus un conduit de refoulement 21 relié fluidiquement à la chambre de mesure 7 et destiné à refouler à l'extérieur du cytomètre en flux 3 le contenu de la chambre de mesure 7. Le conduit de refoulement 21 est plus particulièrement destiné à refouler à l'extérieur du cytomètre en flux 3 un fluide de rinçage introduit dans la chambre de mesure 7 via le troisième conduit d'alimentation 19.

Le cytomètre en flux 3 comprend en outre des moyens de mesure configurés pour mesurer des paramètres de cytométrie des cellules biologiques à analyser, et notamment pour mesurer des propriétés optiques et électriques des cellules biologiques à analyser.

Selon le mode de réalisation représenté sur les figures 1 à 7, les moyens de mesure comportent un dispositif d'émission 22 agencé pour émettre un faisceau lumineux incident en direction de la chambre de mesure 7 et apte à croiser, c'est-à-dire interséquer, le flux de cellules biologiques F introduit dans la chambre de mesure 7, et plusieurs dispositifs de collecte 23a, 23b, 23c décalés angulairement par rapport au flux de cellules biologiques F et agencés pour collecter des faisceau lumineux issus des cellules biologiques traversant la chambre de mesure 7. Néanmoins, les moyens de mesure pourraient comporter par exemple plusieurs dispositifs d'émission décalés angulairement par rapport au flux de cellules biologiques, et également uniquement un seul ou plusieurs dispositifs de collecte.

Les dispositifs d'émission et de collecte sont montés sur les faces externes supérieure et inférieure du support 4 et s'étendent dans un plan sensiblement perpendiculaire à la direction d'écoulement du flux de cellules biologiques F. Le dispositif de collecte 23a est par exemple disposé à l'opposé du dispositif d'émission 22 par rapport à la cellule de mesure 6, tandis que les dispositifs de collecte 23b et 23c sont disposés perpendiculairement au dispositif d'émission 22 par rapport à la cellule de mesure 6. Néanmoins, selon une variante de mise en œuvre de l'invention, le dispositif d'émission 22 et le dispositif de collecte 23a pourraient être montés sur les faces externes latérales du support 4.

Le dispositif d'émission 22 comprend une source lumineuse 24 agencée pour générer le faisceau lumineux incident. La source lumineuse 24 peut être par exemple une source laser agencée pour générer un faisceau laser.

Selon le mode de réalisation représenté sur les figures 1 à 7 et comme cela découle plus particulièrement de la figure 1, le dispositif de collecte 23a comprend une pluralité d'éléments optiques de collecte, et plus particulièrement une fibre optique de collecte centrale 25a, et une ou plusieurs fibres optiques de collecte périphériques 25b. Par exemple, la fibre optique de collecte centrale 25a est destinée à collecter les faisceaux lumineux issus de la chambre de mesure 7 selon le chemin optique du faisceau lumineux incident, c'est-à-dire à 0°, et les fibres optiques de collecte périphériques 25b sont destinées pour certaines à collecter les faisceaux lumineux issus de la chambre de mesure 7 à un angle de l'ordre de 4° et pour d'autres à collecter des faisceaux lumineux issus de la chambre de mesure 7 à un angle de l'ordre de 9°. Le dispositif de collecte 23a pourrait toutefois comprendre une seule fibre optique de collecte périphérique 25b.

Le dispositif de collecte 23b pourrait par exemple comprendre un seul élément optique de collecte, tel qu'une fibre optique de collecte centrale, et le dispositif de collecte 23c pourrait par exemple également comprendre un seul élément optique de collecte, tel qu'une fibre optique de collecte centrale.

Les moyens de mesure comportent en outre une pluralité d'éléments de détection (non représentés sur les figures) associés chacun à un dispositif de collecte 23a-23c respectif. Chaque élément de détection est agencé pour fournir en sortie un signal de mesure déterminé en fonction des faisceaux lumineux collectés par le dispositif de collecte respectif. Au passage de chaque cellule biologique à travers le faisceau lumineux incident, chaque signal de mesure fourni en sortie par chaque élément de détection est par exemple proportionnel à la quantité de lumière absorbée ou réémise par ladite cellule biologique. Chaque élément de détection peut par exemple être un photodétecteur, tel qu'une photodiode ou également photomultiplicateur.

Les moyens de mesure comprennent en outre avantageusement un dispositif de mesure de variation d'impédance électrique agencé pour mesurer la variation d'impédance électrique générée par le passage des cellules biologiques à travers l'orifice d'injection 13. Le dispositif de mesure de variation d'impédance électrique comprend par exemple une première et une deuxième électrodes (non représentées sur les figures) disposées respectivement de part et d'autre de l'orifice d'injection 13. Les première et deuxième électrodes sont destinées à être en contact électrique avec le flux de cellules biologiques F de manière à établir un champ électrique au travers de l'orifice d'injection 13. Selon une variante de réalisation du dispositif de mesure de variation d'impédance électrique, ce dernier pourrait comprendre une seule électrode disposée au moins en partie dans la chambre interne 17, et le potentiel de la chambre interne 12 pourrait être à la terre, de telle sorte que le dispositif de mesure de variation d'impédance électrique soit configuré pour mesurer une variation d'impédance électrique entre la chambre interne 12 et l'électrode placée dans la chambre interne 17.

Un tel dispositif de mesure de variation d'impédance électrique permet de compter le nombre de cellules biologiques passant par l'orifice d'injection 13, et également de déterminer la taille, et plus précisément le volume des cellules biologiques. Le fonctionnement d'un tel dispositif de mesure de variation d'impédance électrique est connu de l'homme du métier et n'est donc pas décrit en détails. Il doit cependant être noté que le passage de chaque cellule biologique à travers l'orifice d'injection 13 provoque une impulsion électrique proportionnelle à la taille ou volume de ladite cellule biologique.

Comme montré sur la figure 8, l'appareil d'analyse 2 comprend en outre une unité de traitement 32 configurée pour analyser les paramètres de cytométrie mesurés par les moyens de mesure du cytomètre en flux 3, et notamment pour analyser les signaux de mesure fournis par chaque élément de détection. L'unité de traitement 32 est plus particulièrement configurée pour différencier et identifier les cellules biologiques d'un échantillon biologique à analyser, et notamment pour déterminer la structure et la forme des cellules biologiques à partir des paramètres de cytométrie mesurés par les moyens de mesure. L'unité de traitement 32 comporte plus particulièrement au moins une carte électronique de traitement équipé d'un microprocesseur.

Comme montré sur la figure 8, l'appareil d'analyse 2 peut comprendre deux cytomètre en flux 3, et également un module de chargement 33 agencé pour déplacer au moins un portoir selon une première direction de déplacement D1, un module de déchargement 34 agencé pour déplacer au moins un portoir selon une deuxième direction de déplacement D2, un module d'agitation (non visible sur la figure 8) agencé pour déplacer au moins un portoir entre le module de chargement et le module de déchargement, le module d'agitation et les modules de chargement et de déchargement définissant un chemin de transport de portoir en forme générale de U. Avantageusement, l'appareil d'analyse 2 comporte également un module de prélèvement 36 agencé pour prélever des échantillons de liquide biologique dans des récipients reçus dans un portoir positionné dans le module d'agitation.

L'appareil d'analyse 2 peut également comprendre :
- un rotor de chargement 37 disposé entre les modules de chargement et de déchargement et d'axe de rotation sensiblement vertical, le rotor de chargement 37 comprenant une pluralité de logements 38 aptes à recevoir des récipients contenant des échantillons de liquide biologique à analyser ou des produits réactifs et notamment aptes à recevoir des cartouches pour réaliser des tests configurables donc d'immunohématologie mais aussi d'immunologie sur du sang total, le module de prélèvement 36 étant agencé pour prélever des échantillons ou des produits réactifs dans les récipients reçus dans le rotor de chargement 37,
- des moyens d'entraînement en rotation associés au rotor de chargement 37 et agencés pour entraîner en rotation le rotor de chargement 37 autour de son axe de rotation.
- un rotor de préparation 39 d'axe de rotation sensiblement vertical, le rotor de préparation 39 comprenant une pluralité de cuvettes de préparation 41, le module de prélèvement 36 étant agencé pour alimenter les cuvettes de préparation 41 en échantillons de liquide biologique ou en produits réactifs préalablement prélevés, et
- des moyens d'entraînement en rotation associés au rotor de préparation 39 et agencés pour entraîner en rotation le rotor de préparation 39 autour de son axe de rotation.

La présence de cartouches sur le rotor de chargement 37 permet d'ajouter des réactifs de préparation additionnels, et donc d'ajouter, aux mesures de paramètres de cytométrie de nature physique ou morphologique, des mesures de paramètres de cytométrie de nature immuno-hématologique.

En outre, l'appareil d'analyse 2 peut être pourvu, au niveau du rotor de préparation 39, d'un dispositif magnétique qui permet de capturer des particules magnétiques en solution. Ces particules magnétiques sont recouvertes d'anticorps permettant de capturer sélectivement un certain type de cellules, par exemple tous les leucocytes. Ainsi, après remise en suspension dans un diluant isotonique, l'échantillon biologique préparé ne contient plus que des leucocytes sans avoir eu recours à la lyse pour détruire les globules rouges mille fois plus nombreux. Donc les leucocytes sont intacts et il est alors possible d'adapter les taux de dilution pour pouvoir effectuer les mesures des N paramètres de cytométrie sur un nombre significatif de cellules avec la possibilité d'identifier des cellules peu nombreuses ou rares. Par ailleurs, les leucocytes peuvent de plus être marqués sélectivement pour une identification immunologique classique (par exemple les lymphocytes T).

Un procédé d'analyse d'un échantillon biologique contenant des cellules biologiques à l'aide d'un cytomètre en flux 2 selon la présente invention va maintenant être décrit.

Un tel procédé d'analyse comprend les étapes suivantes :
- préparation de l'échantillon biologique à analyser, l'étape de préparation comprenant par exemple une étape de dilution de l'échantillon biologique à analyser, par exemple à l'aide d'un diluant isotonique, et/ou une étape de lyse sélective d'au moins certaines des cellules biologiques contenues dans l'échantillon biologique à analyser, telles que les érythrocytes, et/ou une étape de marquage d'au moins certaines des cellules biologiques contenues dans l'échantillon biologique à analyser avec un fluorochrome,
- passage des cellules biologiques contenues dans l'échantillon biologique à analyser dans la chambre de mesure 7 du cytomètre en flux 3,
- mesure de N paramètres de cytométrie pour chaque cellule biologique contenue dans l'échantillon biologique à analyser, telles que des paramètres de cytométrie représentatifs de la morphologie et/ou de la structure des cellules biologiques de l'échantillon biologique à analyser, à l'aide du cytomètre en flux 3,
- détermination, pour chaque cellule biologique de l'échantillon biologique à analyser, d'un point dans un espace à N dimensions dont des coordonnées sont définies en fonction des paramètres de cytométrie mesurés pour ladite cellule biologique de l'échantillon biologique à analyser, chaque axe de coordonnée de l'espace à N dimensions correspondant à un paramètre de cytométrie mesuré respectif ou à une valeur calculée à partir dudit paramètre de cytométrie mesuré respectif,
- regroupement automatique des points relatif à l'échantillon biologique à analyser en différentes grappes de cellules en fonction des paramètres de cytométrie mesurés pour chaque cellule biologique de l'échantillon biologique à analyser, de manière à définir un fichier de grappes d'échantillon, le fichier de grappes d'échantillon étant par exemple au format FCS (Flow Cytometry Standard),
- identification automatique des populations de cellules définies par les différentes grappes de cellules du fichier de grappes d'échantillon,
- comptage automatique des points de chaque grappe de cellules du fichier de grappes d'échantillon,
- comparaison du fichier de grappes d'échantillon avec des fichiers de grappes de référence, chacun des fichiers de grappes de référence étant définis à partir de paramètres de cytométrie d'un échantillon biologique pathologique ou anormal respectif,
- émission d'un message d'alarme lorsque le fichier de grappes d'échantillon est au moins partiellement identique ou similaire à un fichier de grappes de référence, et en particulier lorsque des grappes de cellules prédéterminées du fichier de grappes d'échantillon sont identiques ou similaires à des grappes de cellules prédéterminées du fichier de grappes de référence, le message d'alarme émis contenant avantageusement des indications relatives à une pathologie ou une anormalité associée au fichier de grappes de référence auquel le fichier de grappes d'échantillon est au moins partiellement identique ou similaire, les étapes de détermination, de regroupement, de comparaison et d'émission étant réalisées par l'unité de traitement 32.

Une telle étape de regroupement automatique peut être réalisée de différentes manières connues de l'homme du métier, et n'est donc pas décrite en détails dans la présente description.

Selon un mode de mise en œuvre de l'invention, le procédé d'analyse comprend une étape d'échantillonnage et de numérisation d'un ensemble de signaux analogiques générés pendant la durée de l'étape de mesure de manière à définir un premier fichier de données brutes numérisé pour chacune des N voies de mesure, et une étape de synchronisation et de regroupement des N signaux numérisés pour chaque cellule biologique de l'échantillon à analyser par un premier niveau de traitement informatique. Ladite étape d'échantillonnage et de numérisation est réalisée par l'unité de traitement 32 qui transmet les fichiers par liaison Ethernet à une unité informatique de type PC (non représentée sur la figure 8) qui en fait l'analyse.

Selon un mode de mise en œuvre du procédé d'analyse, ce dernier comprend en outre un étape d'analyse du fichier de grappes d'échantillon de manière à détecter au moins une éventuelle anomalie dans le fichier de grappes d'échantillon, l'étape d'analyse étant réalisée par l'unité de traitement 32. Dans un exemple qui ne fait pas partie de l'invention revendiquée, l'étape de comparaison est réalisée uniquement lorsqu'au moins une anomalie est détectée lors de l'étape d'analyse et le message d'alarme émis lors de l'étape d'émission contient alors également des informations relatives à l'au moins une anomalie détectée. Ces dispositions permettent d'une part d'éviter la réalisation de l'étape de comparaison si l'échantillon biologique à analyser est normal et non pathologique, et donc de diminuer le temps d'exécution des calculs et de fournir plus rapidement les résultats de l'analyse à l'opérateur, et d'autre part de communiquer à l'opérateur un message d'alarme le plus détaillé possible lorsque l'échantillon biologique à analyser est pathologique ou anormal.

L'étape d'analyse comprend de façon avantageuse les étapes suivantes :
- analyse, pour chaque grappe de cellules du fichier de grappes d'échantillon, d'au moins un paramètre morphologique de ladite grappe de cellule, tel que le positionnement de ladite grappe de cellules, la distribution des points de ladite grappe de cellules, le nombres de points de ladite grappe de cellules, et/ou la présence ou l'absence de ladite grappe de cellules,
- détection d'une anomalie si au moins un paramètre morphologique d'au moins une grappe de cellules du fichier de grappes d'échantillon dépasse une valeur de seuil prédéterminée respective.

Selon un mode de mise en œuvre de l'invention, l'étape d'analyse comprend plus particulièrement les étapes suivantes :
- comparaison, pour chaque grappe de cellules du fichier de grappes d'échantillon, du nombre de points regroupés dans ladite grappe de cellules avec au moins une valeur de seuil prédéterminée respective,
- analyse de la distribution des points dans chaque grappe de cellules du fichier de grappes d'échantillon,
- analyse du positionnement des grappes de cellules du fichier de grappes d'échantillon,
- analyse de la présence et/ou de l'absence d'au moins certaines grappes de cellules prédéterminées,
- détection d'une anomalie si la distribution des points dans au moins l'une des grappes de cellules n'est pas gaussienne,
- détection d'une anomalie si au moins deux grappes de cellules du fichier de grappes d'échantillon sont au moins partiellement confondues,
- détection d'une anomalie si la présence ou l'absence d'au moins une grappe de cellules prédéterminée est détectée,
- détection d'une anomalie si le nombre de grappes de cellules est supérieur ou inférieur à une valeur de référence prédéterminée,
- détection d'une anomalie si le nombre de points regroupés dans au moins l'une des grappes de cellules est inférieur et/ou supérieur à une valeur de seuil prédéterminée respective.

Selon un mode de mise en œuvre de l'invention, l'étape d'analyse comprend une étape de comparaison du fichier de grappes d'échantillon avec des fichiers de grappes normaux, chacun des fichiers de grappes normaux étant définis à partir de paramètres de cytométrie d'un échantillon biologique normal respectif. Ces dispositions permettent notamment de faciliter la détection d'anomalie dans le fichier de grappes d'échantillon.

Selon un mode de mise en œuvre de l'invention, l'étape de mesure de paramètres de cytométrie comporte les étapes suivantes :
- émission, à l'aide du dispositif d'émission 22, d'un faisceau lumineux incident en direction des cellules biologiques passant dans la chambre de mesure 7 de telle sorte que le faisceau lumineux incident croise le trajet des cellules biologiques,
- détection, à l'aide des dispositifs de collecte 23a-23c, de différents faisceaux lumineux issus de chaque cellule biologique passant dans la chambre de mesure 7.

Compte tenu de la configuration et de la disposition des différents dispositifs de collecte 23a-23c, l'étape de mesure de paramètres de cytométrie comprend notamment les étapes suivantes :
- mesure de l'intensité des faisceaux lumineux diffusés aux petits angles par chaque cellule biologique à l'aide des fibres optiques de collecte 25b, 25c du dispositif de collecte 23a,
- mesure de l'intensité d'un faisceau lumineux diffusé selon le chemin optique du faisceau lumineux incident par chaque cellule biologique à l'aide de la fibre optique de collecte centrale 25a du dispositif de collecte 23a,
- mesure de l'intensité d'un faisceau lumineux diffusé à 90° par chaque cellule biologique à l'aide du dispositif de collecte 23b, et
- mesure de l'intensité d'un faisceau de fluorescence émis à 90° par chaque cellule biologique à l'aide du dispositif de collecte 23c.

De façon avantageuse, l'étape de mesure de paramètres de cytométrie comprend en outre une étape de mesure de la variation d'impédance électrique générée par le passage des cellules biologiques à travers la chambre de mesure 7, à l'aide du dispositif de mesure de variation d'impédance électrique.

Avantageusement, le procédé d'analyse comprend les étapes initiales suivantes :
- mesure de paramètres de cytométrie pour chaque cellule biologique contenue dans un échantillon biologique de référence à l'aide du cytomètre en flux 3,
- détermination, pour chaque cellule biologique de l'échantillon biologique de référence, d'un point dans un espace à N dimensions dont des coordonnées sont définies en fonction des paramètres de cytométrie mesurés pour chaque cellule biologique de l'échantillon biologique de référence, chaque axe de coordonnée de l'espace à N dimensions correspondant à un paramètre de cytométrie mesuré respectif,

- regroupement automatique des points relatifs à l'échantillon biologique de référence en différentes grappes de cellules en fonction des paramètres de cytométrie mesurés pour chaque cellule biologique de l'échantillon biologique de référence, de manière à définir un fichier de grappes de référence, chaque fichier de grappes de référence étant par exemple au format FCS (Flow Cytometry Standard), les étapes de détermination et de regroupement étant réalisées par l'unité de traitement 32,
- répéter lesdites étapes initiales de mesure, de détermination et de regroupement pour une pluralité d'échantillons biologiques de référence de manière à définir une pluralité de fichiers de grappes de référence.

Comme il va de soi, l'invention ne se limite pas à la seule forme d'exécution du cytomètre en flux et aux seuls modes de mise en œuvre du procédé d'analyse, décrite ci-dessus à titre d'exemples, elle en embrasse au contraire toutes les variantes de mise en œuvre.

## Revendications

1. Procédé d'analyse d'un échantillon biologique contenant des cellules biologiques incluant des cellules sanguines, le procédé d'analyse comprenant les étapes suivantes :
- passage des cellules biologiques de l'échantillon biologique à analyser dans une cellule de mesure (6) d'un cytomètre en flux (3),
- mesure de N paramètres de cytométrie pour chaque cellule biologique de l'échantillon biologique à analyser,
- détermination, pour chaque cellule biologique de l'échantillon biologique à analyser, d'un point dans un espace à N dimensions dont des coordonnées sont définies en fonction des paramètres de cytométrie mesurés pour la cellule biologique correspondante, où N est un entier supérieur ou égal à 3,
- regroupement automatique des points déterminés en différentes grappes de cellules en fonction des paramètres de cytométrie mesurés, de manière à définir un fichier de grappes d'échantillon,
- identification des populations de cellules définies par les différentes grappes de cellules du fichier de grappes d'échantillon défini à l'étape de regroupement,
- comptage des points de chaque grappe de cellules du fichier de grappes d'échantillon défini à l'étape de regroupement, le procédé étant **caractérisé par** l'étape suivante:
- comparaison du fichier de grappes d'échantillon défini à l'étape de regroupement avec des fichiers de grappes de référence, chacun des fichiers de grappes de référence étant définis à partir de paramètres de cytométrie d'un échantillon biologique pathologique ou anormal respectif.

2. Procédé d'analyse selon la revendication 1, lequel comprend en outre une étape d'émission d'un message d'alarme lorsque le fichier de grappes d'échantillon défini à l'étape de regroupement est au moins partiellement identique ou similaire à un fichier de grappes de référence.

3. Procédé d'analyse selon la revendication 2, dans lequel le message d'alarme émis contient des indications relatives à une pathologie ou une anormalité associée au fichier de grappes de référence auquel le fichier de grappes d'échantillon défini à l'étape de regroupement est au moins partiellement identique ou similaire.

4. Procédé d'analyse selon l'une quelconque des revendications 1 à 3, lequel comprend en outre une étape d'analyse du fichier de grappes d'échantillon défini à l'étape de regroupement de manière à détecter au moins une éventuelle anomalie dans le fichier de grappes d'échantillon.

5. Procédé d'analyse selon la revendication 4, dans lequel l'étape d'analyse comprend les étapes suivantes :
- analyse, pour chaque grappe de cellules du fichier de grappes d'échantillon défini à l'étape de regroupement, d'au moins un paramètre morphologique de ladite grappe de cellule,
- détection d'une anomalie si au moins un paramètre morphologique d'au moins une grappe de cellules du fichier de grappes d'échantillon défini à l'étape de regroupement dépasse une valeur de seuil prédéterminée respective.

6. Procédé d'analyse selon la revendication 4 ou 5, dans lequel l'étape d'analyse comprend les étapes suivantes :
- comparaison, pour chaque grappe de cellules du fichier de grappes d'échantillon défini à l'étape de regroupement, du nombre de points regroupés dans ladite grappe de cellules avec au moins une valeur de seuil prédéterminée respective,
- détection d'une anomalie si le nombre de points regroupés dans au moins l'une des grappes de cellules est inférieur et/ou supérieur à l'au moins une valeur de seuil prédéterminée respective.

7. Procédé d'analyse selon l'une quelconque des revendications 4 à 6, dans lequel l'étape d'analyse comprend les étapes suivantes :
- analyse de la distribution des points dans chaque grappe de cellules du fichier de grappes d'échantillon défini à l'étape de regroupement,
- détection d'une anomalie si la distribution des points dans au moins l'une des grappes de cellules n'est pas gaussienne.

8. Procédé d'analyse selon l'une quelconque des revendications 4 à 7, dans lequel l'étape d'analyse comprend les étapes suivantes :
- analyse du positionnement des grappes de cellules du fichier de grappes d'échantillon défini à l'étape de regroupement,
- détection d'une anomalie si au moins deux grappes de cellules du fichier de grappes d'échantillon défini à l'étape de regroupement sont au moins partiellement confondues.

9. Procédé d'analyse selon l'une quelconque des revendications 4 à 8, dans lequel l'étape d'analyse comprend les étapes suivantes :
- analyse des grappes de cellules du fichier de grappes d'échantillon défini à l'étape de regroupement,
- détection d'une anomalie si la présence ou l'absence d'au moins une grappe de cellules prédéterminée est détectée.

10. Procédé d'analyse selon l'une quelconque des revendications 1 à 9, dans lequel l'étape de mesure de paramètres de cytométrie comprend au moins une étape de mesure de paramètres de cytométrie représentatifs de la morphologie et/ou de la structure des cellules biologiques de l'échantillon biologique à analyser.

11. Procédé d'analyse selon la revendication 10, dans lequel l'étape de mesure de paramètres de cytométrie comprend au moins une étape de mesure, pour chaque cellule biologique de l'échantillon biologique à analyser, d'au moins une propriété optique de ladite cellule biologique.

12. Procédé d'analyse selon la revendication 11, dans lequel l'étape de mesure de paramètres de cytométrie comprend :
- une étape de mesure de l'intensité d'un faisceau lumineux diffusé aux petits angles par chaque cellule biologique, et/ou
- une étape de mesure de l'intensité d'un faisceau lumineux diffusé à 90° par chaque cellule biologique, et/ou
- une étape de mesure de l'intensité d'un faisceau lumineux diffusé selon un chemin optique du faisceau lumineux incident par chaque cellule biologique.

13. Procédé d'analyse selon la revendication 11 ou 12, dans lequel l'étape de mesure de paramètres de cytométrie comprend une étape de mesure de l'intensité d'au moins un faisceau de fluorescence émis par chaque cellule biologique, par exemple à 90°.

14. Procédé d'analyse selon l'une quelconque des revendications 1 à 13, dans lequel l'étape de mesure de paramètres de cytométrie comporte les étapes suivantes :
- émission d'un faisceau lumineux incident en direction des cellules biologiques passant dans la chambre de mesure de telle sorte que le faisceau lumineux incident croise le trajet des cellules biologiques,
- détection d'au moins un faisceau lumineux issu de chaque cellule biologique passant dans la chambre de mesure.

15. Procédé d'analyse selon l'une quelconque des revendications 1 à 14, lequel comprend en outre les étapes suivantes :
- passage des cellules biologiques d'un échantillon biologique de référence dans une cellule de mesure (6) d'un cytomètre en flux (3),
- mesure de N paramètres de cytométrie pour chaque cellule biologique de l'échantillon biologique de référence,
- détermination, pour chaque cellule biologique de l'échantillon biologique de référence, d'un point dans un espace à N dimensions dont des coordonnées sont définies en fonction des paramètres de cytométrie mesurés pour ladite cellule biologique de l'échantillon biologique de référence, où N est un entier supérieur ou égal à 3,
- regroupement automatique des points déterminés relatifs à l'échantillon biologique de référence en différentes grappes de cellules en fonction des paramètres de cytométrie mesurés pour chaque cellule biologique de l'échantillon biologique de référence, de manière à définir un fichier de grappes de référence,
- répéter lesdites étapes de passage, de mesure, de détermination et de regroupement pour une pluralité d'échantillons biologiques de référence de manière à définir une pluralité de fichiers de grappes de référence.

16. Appareil d'analyse comprenant :
- un cytomètre en flux (3) comprenant une cellule de mesure (6) destinée au passage de cellules biologiques d'un échantillon biologique à analyser et des moyens de mesure (22, 23a, 23b, 23c) configurés pour mesurer des paramètres de cytométrie des cellules biologiques de l'échantillon biologique à analyser, et
- unité de traitement (32) configurée pour :
- déterminer, pour chaque cellule biologique de l'échantillon biologique à analyser, un point dans un espace à N dimensions dont des coordonnées sont définies en fonction des paramètres de cytométrie mesurés pour la cellule biologique correspondante de l'échantillon biologique à analyser, où N est un entier supérieur ou égal à 3,
- regrouper des points en différentes grappes de cellules en fonction des paramètres de cytométrie mesurés pour chaque cellule biologique de l'échantillon biologique à analyser, de manière à définir un fichier de grappes d'échantillon, **caractérisé en ce que** l'unité de traitement est en outre configurée pour:
- comparer le fichier de grappes d'échantillon défini à l'étape de regroupement avec des fichiers de grappes de référence, chacun des fichiers de grappes de référence étant définis à partir de paramètres de cytométrie d'un échantillon biologique pathologique ou anormal respectif.

## Patentansprüche

1. Verfahren zur Analyse einer biologischen Probe, die biologische Zellen einschließlich Blutzellen enthält, wobei das Analyseverfahren die folgenden Schritte umfasst:
- Durchlauf der biologischen Zellen der zu analysierenden biologischen Probe in eine Messzelle (6) eines Durchflusszytometers (3),
- Messung von N Zytometrieparametern für jede biologische Zelle der zu analysierenden biologischen Probe,
- Bestimmung, für jede biologische Zelle der zu analysierenden biologischen Probe, eines Punktes in einem N-dimensionalen Raum, dessen Koordinaten in Abhängigkeit von den für die entsprechende biologische Zelle gemessenen Zytometrieparametern definiert sind, wobei N eine Ganzzahl größer oder gleich 3 ist,
- automatische Gruppierung der bestimmten Punkte in verschiedene Zellcluster in Abhängigkeit von den gemessenen Zytometrieparametern, um eine Probenclusterdatei zu definieren,
- Identifizierung der Zellpopulationen, die durch die verschiedenen Zellcluster der im Gruppierungsschritt definierten Probenclusterdatei definiert sind,
- Zählung der Punkte jedes Zellclusters der im Gruppierungsschritt definierten Probenclusterdatei, wobei das Verfahren durch den folgenden Schritt gekennzeichnet ist:
- Vergleich der im Gruppierungsschritt definierten Probenclusterdatei mit Referenzclusterdateien, wobei jede der Referenzclusterdateien aus Zytometrieparametern einer jeweiligen pathologischen oder abnormalen biologischen Probe definiert wird.

2. Analyseverfahren nach Anspruch 1, das ferner einen Sendeschritt einer Alarmmeldung umfasst, wenn die im Gruppierungsschritt definierte Probenclusterdatei mindestens teilweise identisch oder ähnlich einer Referenzclusterdatei ist.

3. Analyseverfahren nach Anspruch 2, wobei die ausgegebene Alarmmeldung Hinweise auf eine Pathologie oder Anomalie enthält, die mit der Referenzclusterdatei verbunden ist, mit der die im Gruppierungsschritt definierte Probenclusterdatei mindestens teilweise identisch oder ähnlich ist.

4. Analyseverfahren nach einem der Ansprüche 1 bis 3, das ferner einen Analyseschritt der im Gruppierungsschritt definierten Probenclusterdatei umfasst, um mindestens eine mögliche Anomalie in der Probenclusterdatei zu erfassen.

5. Analyseverfahren nach Anspruch 4, wobei der Analyseschritt die folgenden Schritte umfasst:
- Analyse, für jeden Zellcluster der im Gruppierungsschritt definierten Probenclusterdatei, mindestens eines morphologischen Parameters des Zellclusters,
- Erfassung einer Anomalie, wenn mindestens ein morphologischer Parameter von mindestens einem Zellcluster der im Gruppierungsschritt definierten Probenclusterdatei einen jeweiligen vorbestimmten Schwellenwert überschreitet.

6. Analyseverfahren nach Anspruch 4 oder 5, wobei der Analyseschritt die folgenden Schritte umfasst:
- Vergleich, für jeden Zellcluster der im Gruppierungsschritt definierten Probenclusterdatei, der Anzahl der in dem Zellcluster gruppierten Punkte mit mindestens einem jeweiligen vorbestimmten Schwellenwert,
- Erfassung einer Anomalie, wenn die Anzahl der in mindestens einem der Zellcluster gruppierten Punkte kleiner und/oder größer ist als der mindestens jeweils vorbestimmte Schwellenwert.

7. Analyseverfahren nach einem der Ansprüche 4 bis 6, wobei der Analyseschritt die folgenden Schritte umfasst:
- Analyse der Verteilung der Punkte in jedem Zellcluster der im Gruppierungsschritt definierten Probenclusterdatei,
- Erfassung einer Anomalie, wenn die Verteilung der Punkte in mindestens einem der Zellcluster nicht gaußförmig ist.

8. Analyseverfahren nach einem der Ansprüche 4 bis 7, wobei der Analyseschritt die folgenden Schritte umfasst:
- Analyse der Positionierung der Zellcluster der im Gruppierungsschritt definierten Probenclusterdatei,
- Erfassung einer Anomalie, wenn mindestens zwei Zellcluster der im Gruppierungsschritt definierten Probenclusterdatei mindestens teilweise verwechselt werden.

9. Analyseverfahren nach einem der Ansprüche 4 bis 8, wobei der Analyseschritt die folgenden Schritte umfasst:
- Analyse der Zellcluster der im Gruppierungsschritt definierten Probenclusterdatei,
- Erfassung einer Anomalie, wenn das Vorhandensein oder Fehlen mindestens eines vorbestimmten Zellclusters erfasst wird.

10. Analyseverfahren nach einem der Ansprüche 1 bis 9, wobei der Messschritt von Zytometrieparametern mindestens einen Messschritt von Zytometrieparametern umfasst, die repräsentativ für die Morphologie und/oder die Struktur der biologischen Zellen der zu analysierenden biologischen Probe sind.

11. Analyseverfahren nach Anspruch 10, wobei der Messschritt von Zytometrieparametern mindestens einen Messschritt, für jede biologische Zelle der zu analysierenden biologischen Probe, von mindestens einer optischen Eigenschaft der biologischen Zelle umfasst.

12. Analyseverfahren nach Anspruch 11, wobei der Messschritt von Zytometrieparametern Folgendes umfasst:
- einen Messschritt der Intensität eines von jeder biologischen Zelle in kleinen Winkeln gestreuten Lichtstrahls, und/oder
- einen Messschritt der Intensität eines von jeder biologischen Zelle um 90° gestreuten Lichtstrahls, und/oder
- einen Messschritt der Intensität eines Lichtstrahls, der entlang eines optischen Pfades des auftreffenden Lichtstrahls von jeder biologischen Zelle gestreut wird.

13. Analyseverfahren nach Anspruch 11 oder 12, wobei der Messschritt von Zytometrieparametern einen Messschritt der Intensität mindestens eines von jeder biologischen Zelle emittierten Fluoreszenzstrahls, beispielsweise bei 90°, umfasst.

14. Analyseverfahren nach einem der Ansprüche 1 bis 13, wobei der Messschritt von Zytometrieparametern die folgenden Schritte umfasst:
- Aussendung eines auftreffenden Lichtstrahls in Richtung der die Messkammer durchlaufenden biologischen Zellen, so dass der auftreffende Lichtstrahl den Pfad der biologischen Zellen kreuzt,
- Erfassung mindestens eines Lichtstrahls aus jeder biologischen Zelle, die die Messkammer durchlaufen.

15. Analyseverfahren nach einem der Ansprüche 1 bis 14, das ferner die folgenden Schritte umfasst:
- Durchlauf der biologischen Zellen einer biologischen Referenzprobe in eine Messzelle (6) eines Durchflusszytometers (3),
- Messung von N Zytometrieparametern für jede biologische Zelle der biologischen Referenzprobe,
- Bestimmung, für jede biologische Zelle der biologischen Referenzprobe, eines Punktes in einem N-dimensionalen Raum, dessen Koordinaten in Abhängigkeit von den für die biologische Zelle der biologischen Referenzprobe gemessenen Zytometrieparametern definiert sind, wobei N eine Ganzzahl größer oder gleich 3 ist,
- automatische Gruppierung der bestimmten Punkte in Bezug auf die biologische Referenzprobe in verschiedene Zellcluster in Abhängigkeit von den für jede biologische Zelle der biologischen Referenzprobe gemessenen Zytometrieparametern, um eine Referenzclusterdatei zu definieren,
- Wiederholen der Schritte des Durchlaufens, Messens, Bestimmens und Gruppierens für eine Vielzahl von biologischen Referenzproben, um eine Vielzahl von Referenzclusterdateien zu definieren.

16. Analysegerät, umfassend:
- ein Durchflusszytometer (3), das eine Messzelle (6) umfasst, die für den Durchlauf biologischer Zellen einer zu analysierenden biologischen Probe bestimmt ist, und Messmittel (22, 23a, 23b, 23c), die so eingerichtet sind, dass sie Zytometrieparameter der biologischen Zellen der zu analysierenden biologischen Probe messen, und
- Verarbeitungseinheit (32), die für Folgendes eingerichtet ist:
- Bestimmen, für jede biologische Zelle der zu analysierenden biologischen Probe, eines Punkts in einem N-dimensionalen Raum, dessen Koordinaten in Abhängigkeit von den für die entsprechende biologische Zelle der zu analysierenden biologischen Probe gemessenen Zytometrieparametern definiert sind, wobei N eine Ganzzahl größer oder gleich 3 ist,
- Gruppieren von Punkten in verschiedenen Zellclustern in Abhängigkeit von den für jede biologische Zelle der zu analysierenden biologischen Probe gemessenen Zytometrieparametern, um eine Probenclusterdatei zu definieren, **dadurch gekennzeichnet, dass** die Verarbeitungseinheit ferner für Folgendes eingerichtet ist:
- Vergleichen der im Gruppierungsschritt definierten Probenclusterdatei mit Referenzclusterdateien, wobei jede der Referenzclusterdateien aus Zytometrieparametern einer jeweiligen pathologischen oder abnormalen biologischen Probe definiert wird.

## Claims

1. An analysis method for analyzing a biological sample containing biological cells including blood cells, the analysis method comprising the following steps:
- passage of the biological cells of the biological sample to be analyzed into a measuring cell (6) of a flow cytometer (3),
- measurement of N cytometry parameters for each biological cell of the biological sample to be analyzed,
- determination, for each biological cell of the biological sample to be analyzed, of a point in a N-dimensional space whose coordinates are defined depending on the cytometry parameters measured for the corresponding biological cell, where N is an integer greater than or equal to 3,
- automatic clustering of the determined points into different cell clusters depending on the measured cytometry parameters, so as to define a sample cluster file,
- identification of the cell populations defined by the different cell clusters of the sample cluster file defined at the clustering step,
- counting of the points of each cell cluster of the sample cluster file defined at the clustering step,
the method being **characterized by** the following step:
- comparison of the sample cluster file defined at the clustering step with reference cluster files, each of the reference cluster files being defined from cytometry parameters of a respective pathological or abnormal biological sample.

2. The analysis method according to claim 1, which further comprises a step of emitting an alarm message when the sample cluster file defined at the clustering step is at least partially identical or similar to a reference cluster file.

3. The analysis method according to claim 2, wherein the emitted alarm message contains indications related to a pathology or an abnormality associated to the reference cluster file to which the sample cluster file defined at the clustering step is at least partially identical or similar.

4. The analysis method according to any one of claims 1 to 3, which further comprises a step of analyzing the sample cluster file defined at the clustering step so as to detect at least one possible anomaly in the sample cluster file.

5. The analysis method according to claim 4, wherein the analysis step comprises the following steps:
- analysis, for each cell cluster of the sample cluster file defined at the clustering step, of at least one morphological parameter of said cell cluster,
- detection of an anomaly if at least one morphological parameter of at least one cell cluster of the sample cluster file defined at the clustering step exceeds a respective predetermined threshold value.

6. The analysis method according to claim 4 or 5, wherein the analysis step comprises the following steps:
- comparison, for each cell cluster of the sample cluster file defined at the clustering step, of the number of points clustered in said cell cluster with at least one respective predetermined threshold value,
- detection of an anomaly if the number of points clustered in at least one of the cell clusters is less and/or greater than the at least one respective predetermined threshold value.

7. The analysis method according to any one of claims 4 to 6, wherein the analysis step comprises the following steps:
- analysis of the distribution of the points in each cell cluster of the sample cluster file defined at the clustering step,
- detection of an anomaly if the distribution of the points in at least one of the cell clusters is not Gaussian.

8. The analysis method according to any one of claims 4 to 7, wherein the analysis step comprises the following steps:
- analysis of the positioning of the cell clusters of the sample cluster file defined at the clustering step,
- detection of an anomaly if at least two cell clusters of the sample cluster file defined at the clustering step are at least partially confused.

9. The analysis method according to any one of claims 4 to 8, wherein the analysis step comprises the following steps:
- analysis of the cell clusters of the sample cluster file defined at the clustering step,
- detection of an anomaly if the presence or absence of at least one predetermined cell cluster is detected.

10. The analysis method according to any one of claims 1 to 9, wherein the step of measuring cytometry parameters comprises at least one step of measuring cytometry parameters representative of the morphology and/or the structure of the biological cells of the biological sample to be analyzed.

11. The analysis method according to claim 10, wherein the step of measuring cytometry parameters comprises at least one step of measuring, for each biological cell of the biological sample to be analyzed, at least one optical property of said biological cell.

12. The analysis method according to claim 11, wherein the step of measuring cytometry parameters comprises:
- a step of measuring the intensity of a light beam scattered at small angles by each biological cell, and/or
- a step of measuring the intensity of a light beam scattered at 90° by each biological cell, and/or
- a step of measuring the intensity of a light beam scattered along an optical path of the incident light beam by each biological cell.

13. The analysis method according to claim 11 or 12, wherein the step of measuring cytometry parameters comprises a step of measuring the intensity of at least one fluorescence beam emitted by each biological cell, for example at 90°.

14. The analysis method according to any one of claims 1 to 13, wherein the step of measuring cytometry parameters includes the following steps:
- emission of an incident light beam towards the biological cells passing through the measurement chamber such that the incident light beam crosses the path of the biological cells,
- detection of at least one light beam from each biological cell passing through the measurement chamber.

15. The analysis method according to any one of claims 1 to 14, which further comprises the following steps:
- passage of the biological cells of a reference biological sample into a measuring cell (6) of a flow cytometer (3),
- measurement of N cytometry parameters for each biological cell of the reference biological sample,
- determination, for each biological cell of the reference biological sample, of a point in a N-dimensional space whose coordinates are defined depending on the cytometry parameters measured for said biological cell of the reference biological sample, where N is an integer greater than or equal to 3,
- automatic clustering of the determined points relating to the reference biological sample into different cell clusters depending on the cytometry parameters measured for each biological cell of the reference biological sample, so as to define a reference cluster file,
- repeating said passage, measurement, determination and clustering steps for a plurality of reference biological samples so as to define a plurality of reference cluster files.

16. An analysis apparatus comprising:
- a flow cytometer (3) comprising a measurement cell (6) intended for the passage of biological cells of a biological sample to be analyzed and measuring means (22, 23a, 23b, 23c) configured to measure cytometry parameters of the biological cells of the biological sample to be analyzed, and
- a processing unit (32) configured to:
- determine, for each biological cell of the biological sample to be analyzed, a point in a N-dimensional space whose coordinates are defined depending on the cytometry parameters measured for the corresponding biological cell, where N is an integer greater than or equal to 3,
- cluster the points into different cell clusters depending on the cytometry parameters measured for each biological cell of the biological sample to be analyzed, so as to define a sample cluster file,
**characterized in that** the analysis apparatus being further configured to:
- compare the sample cluster file defined at the clustering step with reference cluster files, each of the reference cluster files being defined from cytometry parameters of a respective pathological or abnormal biological sample.
